Europäisches Patentamt

European Patent Office

Office européen des brevets

(19)

(11) Veröffentlichungsnummer : **0 112 995**
**B1**

# (12) EUROPÄISCHE PATENTSCHRIFT

(45) Veröffentlichungstag der Patentschrift :
28.05.86

(21) Anmeldenummer : 83110899.8

(22) Anmeldetag : 02.11.83

(51) Int. Cl.⁴ : **C 09 D 11/10, C 08 G 63/46**

(54) **Druckfarbe.**

(30) Priorität : 25.11.82 DE 3243530

(43) Veröffentlichungstag der Anmeldung :
11.07.84 Patentblatt 84/28

(45) Bekanntmachung des Hinweises auf die Patenterteilung : 28.05.86 · Patentblatt 86/22

(84) Benannte Vertragsstaaten :
AT BE CH DE FR GB IT LI NL SE

(56) Entgegenhaltungen :
EP-A- 0 042 515
FR-A- 1 371 786
US-A- 4 143 012

(73) Patentinhaber : BASF Farben + Fasern Aktiengesellschaft
Am Neumarkt 30
D-2000 Hamburg 70 (DE)

(72) Erfinder : Fries, Werner, Dipl.-Chem. Dr.
Normannenweg 1
D-7252 Weil der Stadt (DE)
Erfinder : Klemm, Karl-Wilhelm, Dipl.-Chem. Dr.
Ahornstrasse 12
D-7000 Stuttgart 70 (DE)

(74) Vertreter : Habbel, Hans-Georg, Dipl.-Ing.
Postfach 3429 Am Kanonengraben 11
D-4400 Münster (DE)

## Beschreibung

Die Erfindung betrifft eine Druckfarbe zum Bedrucken von Papier, bestehend aus Pigment, einem mit Fettsäuren mit einer Iodzahl unter 20 modifizierten Alkydharz-Bindemittel und gegebenenfalls weiterem Bindemittel und weiteren üblichen Bestandteilen wie Gleitmitteln, Lösungsmitteln, Verdickungsmitteln und Thixotropierungsmitteln.

Zur Herstellung von Zeitungspapier wird entfärbtes Altpapier in Form eines wäßrigen Preßkuchens mitverwendet. Geeignete Altpapiere sind holzfreies und Illustrationspapier, insbesondere Papier von Büchern, z. B. Telefonbüchern. Die Entfärbung von bedrucktem Altpapier wird auch als Deinking bezeichnet. Die Entfärbbarkeit von bedrucktem Papier hat also an Bedeutung gewonnen, und damit hat das Interesse an Druckfarben, die zu entfärbbaren oder deinkbaren Druckerzeugnissen führen, zugenommen.

Aus der DE-OS 30 23 118 ist eine Druckfarbe bekannt, die als Bindemittel ein mit Ölen, Fettsäuren und/oder Fettalkoholen einer Jodzahl von kleiner als ungefähr 95 modifiziertes Alkydharz enthält. Als Vorteil dieser bekannten Druckfarbe wird eine gute Deinkbarkeit angegeben.

Es hat sich nun gezeigt, daß die in der DE-OS 30 23 118 beschriebene vollständige Entfernung der Druckfarbe beim Deinkverfahren unter Praxisbedingungen nicht erreicht wird. Es ist daher Aufgabe der vorliegenden Erfindung, eine Druckfarbe mit verbesserter Deinkbarkeit anzugeben.

Überraschenderweise wurde gefunden, daß die Deinkbarkeit einer Druckfarbe, die als wesentliches Bindemittel ein mit Fettsäuren modifiziertes Alkydharz enthält, verbessert werden kann, wenn das Alkydharz zusätzlich mit einem Styrol-Allylalkohol-Copolymerisat modifiziert ist.

Gegenstand der Erfindung ist daher eine Druckfarbe der eingangs genannten Art, die dadurch gekennzeichnet ist, daß als Bindemittel ein Alkydharz mit einer Säurezahl unter 11 in einem Anteil von mindestens 40 Gew.-%, bezogen auf den Gesamtgehalt an Bindemittel, enthalten ist, das hergestellt worden ist durch Umsetzung

a) einer Fettsäure mit 6-20 Kohlenstoffatomen oder eines Gemisches derartiger Säuren oder deren Triglyceride,

b) eines Polyols,

c) eines Styrol-Allylalkohol-Copolymerisats mit einem Molekulargewicht (Gewichtsmittel) von 1 500-2 500 und einem Esteräquivalentgewicht von 200 bis 350 und

d) einer Dicarbonsäure, wobei der Anteil des Styrol-Allylalkohol-Copolymerisats 1 bis 30 Mol-%, bezogen auf die Summe von Polyol und Styrol-Allylalkohol-Copolymerisat, beträgt.

Vorteilhaft sind als Komponente a) Kokosöl und/oder Palmkernöl bzw. die aus diesen gewonnenen Fettsäuren verwendet worden.

Als Polyol sind vorteilhaft Trimethylolpropan, Glycerin und/oder Pentaerythrit verwendet worden.

Bevorzugte Dicarbonsäuren sind Phthalsäure, Isophthalsäure, Adipinsäure, gesättigte dimere Fettsäuren oder Tetrahydrophthalsäure.

Vorteilhaft weist das modifizierte Alkydharz eine OH-Zahl von 50 bis 150 auf.

Als weiteres Bindemittel enthält die Druckfarbe vorteilhaft Kohlenwasserstoffharz in einem Anteil bis zu 60 Gew.-%, bezogen auf den Gesamtgehalt an Bindemittel. Hierdurch wird die Scheuerfestigkeit frisch hergestellter Druckerzeugnisse verbessert, ohne das die Deinkbarkeit wesentlich verschlechtert wird. Außerdem werden das Nebeln und das Emulgieren der Druckfarbe in der Druckmaschine reduziert.

Die Erfindung betrifft auch ein Verfahren zur Herstellung einer Druckfarbe, bei dem Pigment, ein mit Fettsäuren mit einer Iodzahl unter 20 modifiziertes Alkydharzbindemittel und gegebenenfalls weiteres Bindemittel und weitere übliche Bestandteile wie Gleitmittel, Lösungsmittel, Verdickungsmittel und Thixotropierungsmittel mittels einer Dispergiervorrichtung dispergiert werden. Das erfindungsgemäße Verfahren ist dadurch gekennzeichnet, daß zur Herstellung des Alkydharzbindemittels

a) eine Fettsäure mit 6 bis 20 Kohlenstoffatomen oder ein Gemisch derartiger Säuren oder deren Triglyceride,

b) ein Polyol,

c) ein Styrol-Allylalkohol-Copolymerisat mit einem Molekulargewicht (Gewichtsmittel) von 1 500 bis 2 500 und einem Esteräquivalentgewicht von 200 bis 350 und

d) eine Dicarbonsäure miteinander umgesetzt werden, wobei der Anteil des Styrol-Allylalkohol-Copolymerisats 1 bis 30 Mol-%, bezogen auf die Summe von Polyol und Styrol-Allylalkohol-Copolymerisat, beträgt.

Als Komponente a) werden bei dem erfindungsgemäßen Verfahren vorteilhaft Kokosöl und/oder Palmkernöl bzw. die aus diesen gewonnenen Fettsäuren verwendet :

Als Polyol werden Trimethylolpropan, Glycerin und/oder Pentaerythrit bevorzugt, und als Dicarbonsäure werden vorteilhaft Phthalsäure, Isophthalsäure, Adipinsäure, gesättigte dimere Fettsäuren oder Tetrahydrophthalsäure eingesetzt.

Bei der Herstellung der Druckfarbe wird vorteilhaft als weiteres Bindemittel ein Kohlenwasserstoffharz in einem Anteil bis zu 60 Gew.-%, bezogen auf den Gesamtgehalt an Bindemittel, mitverwendet.

Die Erfindung betrifft weiterhin die Verwendung der Druckfarbe für Flach-, Hoch- oder Tiefdruck sowie insbesondere die Verwendung einer Druckfarbe, bestehend aus Pigment, einem Alkydharz-Bindemittel, das durch die Umsetzung einer Fettsäure mit 6 bis 20 Kohlenstoffatomen oder eines Gemisches derartiger Säuren oder deren Triglyceride, eines Polyols, eines Styrol-Allylalkohol-Copolymerisats mit einem Molekulargewicht (Gewichtsmittel) von 1 500 bis 2 500 und einem Esteräquivalentgewicht von 200 bis 350 und einer Dicarbonsäure erhalten worden ist, wobei der Anteil des Styrol-Allylalkohol-Copolymerisats 1 bis 30 Mol-%, bezogen auf die Summe von Polyol und Styrol-Allylalkohol-Copolymerisat, beträgt, gegebenenfalls weiterem Bindemittel und weiteren üblichen Bestandteilen wie Gleitmittel, Lösungsmittel, Verdickungsmittel und Thixotropierungsmittel zur Herstellung von deinkbaren Papierdrucken.

Im folgenden wird die Erfindung an Hand von Ausführungsbeispielen näher erläutert.

Beispiel 1

Herstellung einer Druckfarbe I

Es werden 950 Gewichtsteile Kokosfettsäure in einem Reaktor unter schwachem Schutzgasstrom auf 100 °C erhitzt. Dann werden 420 Gew.-Teile Trimethylolpropan, 610 Gew.-Teile eines handelsüblichen Styrol-Allylalkohol-Copolymerisats mit einem Molekulargewicht (Gewichtsmittel) von 2 340 und einem Esteräquivalentgewicht von 300 und 520 Gew.-Teile Phthalsäureanhydrid zusammen mit 160 Gew.-Teilen Xylol als Schleppmittel hinzugegeben. Es wird weiter aufgeheizt, bis das Schleppmittel lebhaft destilliert. Bei dieser Temperatur wird die Veresterungsreaktion fortgesetzt, bis eine Säurezahl unter 11 erreicht ist. Danach wird das Xylol im Vakuum abdestilliert.

Das erhaltene Harz wird in einem Mineralöl mit einem Siedebereich von 230 bis 260 °C gelöst, so daß eine 80 %ige Lösung entsteht. Unter Verwendung dieser Lösung wird mittels einer Dreiwalze eine Druckfarbe folgender Zusammensetzung hergestellt :

| | |
|---|---|
| Ruß | 16 Gew.-Teile |
| Polyethylenwachs | 1 Gew.-Teil |
| Kokosfett | 6 Gew.-Teile |
| Alkydharz (80 %ig in Mineralöl) | 66 Gew.-Teile |
| Mineralöl (Siedebereich 230-260 °C) | 11 Gew.-Teile |

Beispiel 2

Herstellung einer Druckfarbe II

Unter Verwendung des Alkydharzes gemäß Beispiel 1 wird mittels einer Dreiwalze eine Druckfarbe folgender Zusammensetzung hergestellt :

| | |
|---|---|
| Ruß | 16 Gew.-Teile |
| Polyethylenwachs | 1 Gew.-Teil |
| Kokosfett | 6 Gew.-Teile |
| Alkydharz (80 %ig in Mineralöl) | 30 Gew.-Teile |
| aromatisches Kohlenwasserstoffharz (60 %ig in Mineralöl) | 36 Gew.-Teile |
| Mineralöl | 11 Gew.-Teile |

Das verwendete aromatische Kohlenwasserstoffharz weist einen Erweichungspunkt von 117 bis 123 °C und eine Bromzahl von 15 bis 30 auf. Das verwendete Mineralöl weist einen Siedebereich von 230 bis 260 °C auf.

Beispiel 3

Herstellung einer Druckfarbe III

Unter einem Stickstoffstrom werden in einem Reaktor 1 000 Gew.-Teile Kokosfett auf 100 °C erhitzt. Bei dieser Temperatur werden 370 Gew.-Teile Trimethylolpropan und 1 Gew.-Teil Lithiumstearat zugegeben. Es wird auf 250 °C aufgeheizt und bei dieser Temperatur umgeestert. Nach Abkühlung auf 150 °C werden 610 Gew.-Teile eines Styrol-Allylalkohol-Copolymerisats mit einem Molekulargewicht (Gewichtsmittel) von 2 340 und einem Esteräquivalentgewicht von 300, 519 Gew.-Teile Phthalsäureanhydrid und als Schleppmittel 160 Gew.-Teile Xylol zugegeben. Bei lebhaft destilierendem Schleppmittel wird bis zu einer Säurezahl unter 11 verestert. Hierauf werden das Xylol im Vakuum abdestilliert und das Harz 80 %ig in Mineralöl gelöst.

Es wird unter Verwendung dieses Alkydharzes mittels einer Dreiwalze eine Druckfarbe folgender Zusammensetzung hergestellt :

| | |
|---|---|
| Ruß | 16 Gew.-Teile |
| Polyethylenwachs | 1 Gew.-Teil |

3

| | |
|---|---|
| Kokosfett | 6 Gew.-Teile |
| Alkydharz (80 %ig in Mineralöl) | 30 Gew.-Teile |
| Kohlenwasserstoffharz gem. Beispiel 2 (60 %ig in Mineralöl) | 36 Gew.-Teile |
| Mineralöl | 11 Gew.-Teile |

Durchführung von Druckversuchen und Deinking der Druckerzeugnisse

Im Offsetdruckverfahren werden unter Verwendung der Druckfarben I, II und III Drucke hergestellt. Als Motiv wird eine Seite eines Telefonbuches gewählt, und es wird auf Telefonbuchpapier beidseitig gedruckt. Die erhaltenen Druckerzeugnisse werden 144 Stunden bei 60 °C gealtert. Danach werden die Proben dem Normalklima 23 °C/50 % relative Luftfeuchtigkeit angeglichen. Nach Zerkleinerung der Proben werden diese dem Flotations-Deinking-Prozeß unterworfen. Hierbei wird das Papier in einem zweistufigen Prozeß desintegriert und mit einer wäßrigen Lösung von Natriumhydroxid, Wasserglas, Ölsäure und Wasserstoffperoxid behandelt. In einer Flotationszelle wird der aufsteigende Druckfarbenschaum abgetrennt. Aus der zurückbleibenden Suspension werden mittels einer Nutsche Probeblätter hergestellt, die anschließend getrocknet werden. Durch Weißgradmessungen an diesen Probeblättern wird der Grad der Druckfarbenentfernung bestimmt. Hierzu wird der Reflexionsfaktor für eine Schwerpunktwellenlänge von 457 nm gemessen. Die Druckfarbenentfernungs-Maßzahl (DEM) ergibt sich aus Weißgrad-Mittel-werten (WG) der Probeblätter des bedruckten Stoffes (BS), der einer Desintegration ohne Chemiekalienzusatz unterworfen ist, des unbedruckten Stoffes (US), der durch eine Behandlung von unbedruckten Teilen, z. B. Randstreifen, erhalten worden ist und des deinkten Stoffes (DS) nach folgender Formel :

$$DEM\ (\%) = \frac{(WG_{DS}-WG_{BS}) \cdot 100}{WG_{US}-WG_{BS}}$$

Die mit den Druckfarben I, II und III hergestellten Druckerzeugnisse ergeben folgende Werte der Druckfarbenentfernungs-Maßzahl :

| | |
|---|---|
| Druckfarbe I | DEM = 80-85 % |
| Druckfarbe II | DEM = 79-84 % |
| Druckfarbe III | DEM = 79-84 % |

Vergleichsbeispiel

Dem Beispiel 1 a der DE-OS 30 23 118 entsprechend wird aus 1418 Gewichtsteilen Kokosöl, 0,1 Gew.- Teilen Bleiglätte, 448 Gew.-Teilen Trimethylolpropan, 628 Gew.-Teilen Isophthalsäure und 5,9 Gew.- Teilen p-Toluolsulfonsäure, unter Verwendung von Xylol als Scheppmittel ein Alkydharz-Bindemittel hergestellt. Dieses wird entsprechend dem Beispiel 2 b DE-OS 30 23 118, unter Verwendung von Polyethylenwachs, phenolmodifiziertem Mineralöl löslichem Kolophoniumharz, Gilsonit-Asphalt und Mineralöl zu einer Druckfarbe verarbeitet.

Unter den gleichen Bedingungen wie in den vorstehend beschriebenen Beispielen werden Druckproben hergestellt und deinkt. Hierbei wird eine Druckfarbenentfernungs-Maßzahl von 71 bis 72 % erreicht.

**Patentansprüche**

1. Druckfarbe zum Bedrucken von Papier, bestehend aus Pigment, einem mit Fettsäuren mit einer Iodzahl unter 20 modifizierten Alkydharz-Bindemittel und gegebenenfalls weiterem Bindemittel und weiteren üblichen Bestandteilen wie Gleitmittel, Lösungsmitteln, Verdickungsmitteln und Thixotropierungsmitteln, dadurch gekennzeichnet, daß als Bindemittel ein Alkydharz mit einer Säurezahl unter 11 in einem Anteil von mindestens 40 Gew.-%, bezogen auf den Gesamtgehalt an Bindemitteln, enthalten ist, das hergestellt worden ist durch Umsetzung.

a) einer Fettsäure mit 6 bis 20 Kohlenstoffatomen oder eines Gemisches derartiger Säuren oder deren Triglyceride,
b) eines Polyols,
c) eines Styrol-Allylalkohol-Copolymerisates mit einem Molekulargewicht (Gewichtsmittel) von 1 500 bis 2 500, und einem Esteräquivalentgewicht von 200 bis 350 und
d) einer Dicarbonsäure, wobei der Anteil des Styrol-Allylalkohol-Copolymerisats 1 bis 30 Mol-%, bezogen auf die Summe von Polyol und Styrol-Allylalkohol-Copolymerisat, beträgt.

2. Druckfarbe nach Anspruch 1, dadurch gekennzeichnet, daß als Komponente a Kokosöl und/oder Palmkernöl bzw. die aus diesen gewonnenen Fettsäuren verwendet worden sind.

3. Druckfarbe nach Anspruch 1 oder 2, dadurch gekennzeichnet, daß als Polyol Trimethylolpropan, Glycerin und/oder Pentaerythrit verwendet worden sind.

4. Druckfarbe nach Anspruch 1 bis 3, dadurch gekennzeichnet, daß als Dicarbonsäure Phthalsäure, Isophthalsäure, Adipinsäure, gesättigte dimere Fettsäuren oder Tetrahydropthalsäure verwendet worden sind.

5. Druckfarbe nach Anspruch 1 bis 4, dadurch gekennzeichnet, daß das modifizierte Alkydharz eine OH-Zahl von 50 bis 150 aufweist.

6. Druckfarbe nach Anspruch 1 bis 5, dadurch gekennzeichnet, daß als weiteres Bindemittel Kohlenwasserstoffharz in einem Anteil bis zu 60 Gew.-%, bezogen auf den Gesamtgehalt an Bindemittel, enthalten ist.

7. Verfahren zur Herstellung einer Druckfarbe, bei dem Pigment, ein mit Fettsäuren mit einer Iodzahl unter 20 modifiziertes Alkydharzbindemittel und gegebenenfalls weiteres Bindemittel und weitere übliche Bestandteile wie Gleitmittel, Lösungsmittel, Verdickungsmittel und Thixotropierungsmittel mittels einer Dispergiervorrichtung dispergiert werden, dadurch gekennzeichnet, daß zur Herstellung des Alkydharz-Bindemittels

a) eine Fettsäure mit 6 bis 20 Kohlenstoffatomen oder ein Gemisch derartiger Säuren oder deren Triglyceride,

b) ein Polyol,

c) ein Styrol-Allylalkohol-Copolymerisat mit einem Molekulargewicht (Gewichtsmittel) von 1 500 2 500 und einem Esteräquivalentgewicht von 200 bis 350 und

d) eine Dicarbonsäure

miteinander umgesetzt werden, wobei der Anteil des Styrol-Allylalkohol-Copolymerisats 1 bis 30 Mol-%, bezogen auf die Summe von Polyol und Styrol-Allylalkohol-Copolymerisat beträgt.

8. Verfahren nach Anspruch 7, dadurch gekennzeichnet, daß als Komponente a Kobosöl und/oder Palmkernöl bzw. die aus diesen gewonnenen Fettsäuren verwendet werden.

9. Verfahren nach Anspruch 7 oder 8, dadurch gekennzeichnet, daß als Polyol Trimethylolpropan, Glyzerin und/oder Pentaerythrit verwendet werden.

10. Verfahren nach Anspruch 7 bis 9, dadurch gekennzeichnet, daß als Dicarbonsäure Phthalsäure, Isophthalsäure, Adipinsäure, gesättigte dimere Fettsäuren oder Tetrahydrophthalsäure verwendet werden.

11. Verfahren nach Anspruch 7 bis 10, dadurch gekennzeichnet, daß das modifizierte Alkydharz eine OH-Zahl von 50 bis 150 aufweist.

12. Verfahren nach Anspruch 7 bis 11, dadurch gekennzeichnet, daß als weiteres Bindemittel Kohlenwasserstoffharz in einem Anteil bis zu 60 Gew.-%, bezogen auf den Gesamtgehalt an Bindemittel, verwendet wird.

13. Verwendung der Druckfarbe nach Anspruch 1 bis 6 für Flach-, Hoch- oder Tiefdruck.

14. Verwendung einer Druckfarbe, bestehend aus Pigment, einem Alkydharz-Bindemittel, das durch Umsetzung einer Fettsäure mit 6 bis 20 Kohlenstoffatomen oder eines Gemisches derartiger Säuren oder deren Triglyceride, eines Polyols, eines Styrol-Allylalkohol-Copolymerisats mit einem Molekulargewicht (Gewichtsmittel) von 1 500 bis 2 500, und einem Esteräquivalentgewicht von 200 bis 350 und einer Dicarbonsäure erhalten worden ist, wobei der Anteil des Styrol-Allylalkohol-Copolymerisats 1 bis 30 Mol-%, bezogen auf die Summe von Polyol und Styrol-Allylalkohol-Copolymerisat, beträgt, gegebenenfalls weiterem Bindemittel und weiteren üblichen Bestandteilen wie Gleitmitteln, Lösungsmitteln, Verdickungsmitteln und Thixotropierungsmitteln zur Herstellung von deinkbaren Papierdrucken.

**Claims**

1. Printing ink for printing on paper, consisting of a pigment, an alkyd resin binder modified with fatty acids having an iodine number of less than 20 and, if appropriate, further binders and further conventional constituents, such as lubricants, solvents, thickeners and thixotropic agents, characterised in that an alkyd resin having an acid number of less than 11 is present as the binder, in an amount of not less than 40 % by weight, based on the total content of binders, the said alkyd resin being prepared by reacting

a) a fatty acid having 6 to 20 carbon atoms or a mixture of such acids or their triglycerides,

b) a polyol,

c) a styrene/allyl alcohol copolymer having a molecular weight (weight average) of 1 500 to 2 500 and an ester equivalent weight of 200 to 350, and

d) a dicarboxylic acid, the amount of styrene/allyl alcohol copolymer being 1 to 30 mol %, based on the sum of the polyol and the styrene/allyl alcohol copolymer.

2. Printing ink according to Claim 1, characterised in that coconut oil and/or palm kernel oil, or the fatty acids obtained from these, are used as component a.

3. Printing ink according to Claim 1 or 2, characterised in that the polyol used is trimethylolpropane, glycerol and/or pentaerythritol.

4. Printing inks according to Claims 1 to 3, characterised in that the dicarboxylic acid used is phthalic acid, isophthalic acid, adipic acid, a saturated dimeric fatty acid or tetrahydrophthalic acid.

5. Printing ink according to Claims 1 to 4, characterised in that the modified alkyd resin an OH number of 50 to 150.

5

6. Printing ink according to Claims 1 to 5, characterised in that a hydrocarbon resin is present in an amount of up to 60 % by weight, based on the total content of binders, as a further binder.

7. Process for the preparation of a printing ink, in which a pigment, an alkyd resin binder modified with fatty acids having an iodine number of less than 20 and, if appropriate, further binders and further conventional constituents, such as lubricants, solvents, thickeners and thixotropic agents, are dispersed by means of a dispersing apparatus, characterised in that the alkyd resin binder is prepared by reacting.

a) a fatty acid having 6 to 20 carbon atoms or a mixture of such acids or their triglycerides,

b) a polyol,

c) a styrene/allyl alcohol copolymer having a molecular weight (weight average) of 1 500 to 2 500 and an ester equivalent weight of 200 to 350, and

d) a dicarboxylic acid

with one another, the amount of styrene/allyl alcohol copolymer being 1 to 30 mol %, based on the sum of the polyol and the styrene/allyl alcohol copolymer.

8. Process according to Claim 7, characterised in that coconut oil and/or palm kernel oil, or the fatty acids obtained from these, are used as component a.

9. Process according to Claim 7 or 8, characterised in that the polyol used is trimethylolpropane, glycerol and/or pentaerythritol.

10. Process according to Claims 7 to 9, characterised in that the dicarboxylic acid used is phthalic acid, isophthalic acid, adipic acid, a saturated dimeric fatty acid or tetrahydrophthalic acid.

11. Process according to Claims 7 to 10, characterised in that the modified alkyd resin has an OH number of 50 to 150.

12. Process according to Claims 7 to 11, characterised in that a hydrocarbon resin is used in an amount of up to 60 % by weight, based on the total content of binders, as a further binder.

13. Use of the printing ink according to Claims 1 to 6 for flatbed printing, letterpress printing or gravure printing.

14. Use of a printing ink, consisting of a pigment, an alkyd resin binder, which is obtained by reacting a fatty acid having 6 to 20 carbon atoms or a mixture of such acids or their triglycerides, a polyol, a styrene/allyl alcohol copolymer having a molecular weight (weight average) of 1 500 to 2 500 and an ester equivalent weight of 200 to 350, and a dicarboxylic acid, the amount of styrene/allyl alcohol copolymer being 1 to 30 mol%, based on the sum of the polyol and the styrene/allyl alcohol copolymer, and, if appropriate, further binders and further conventional constituents, such as lubricants, solvents, thickeners and thixotropic agents, for the preparation of deinkable prints on paper.

**Revendications**

1. Encre d'imprimerie servant à imprimer le papier, formée de pigment, d'un liant de résine alkyle modifié par des acides gras ayant un indice d'iode inférieur à 20 et éventuellement d'un autre liant et d'autres constituants usuels comme des lubrifiants, solvants épaississants et agents thixotropiques, caractérisée par le fait que comme liant est contenue, en proportion d'au moins 40 % en poids relativement à la teneur totale en liant, une résine alkyde ayant un indice d'acide inférieure à 11, qui a été préparée par réaction :

a) d'un acide gras à 6 à 20 atomes de carbone ou d'un mélange d'acides de ce genre ou de leurs triglycérides,

b) d'un polyol,

c) d'un produit de copolymérisation styrène/alcool allylique ayant un poids moléculaire (moyenne en poids) de 1 500 à 2 500 et un poids équivalent ester de 200 à 350 et

d) d'un acide dicarboxylique, la proportion du produit de copolymérisation styrène/alcool allylique étant de 1 à 30 mol % relativement à la somme du polyol et du produit de copolymérisation styrène/alcool allylique.

2. Encre d'imprimerie selon la revendication 1, caractérisée par le fait que comme constituant a), on a utilisé l'huile de coco et/ou l'huile de palmiste ou les acides gras tirés de celles-ci.

3. Encre d'imprimerie selon l'une des revendications 1 et 2, caractérisée par le fait que comme polyol, on a utilisé le triméthylolpropane, le glycérol et/ou le pentaérythritol.

4. Encre d'imprimerie selon l'une des revendications 1 à 3, caractérisée par le fait que comme acide dicarboxylique, on a utilisé l'acide phtalique, l'acide isophtalique, l'acide adipique, des acides gras dimères saturés ou l'acide tétrahydrophtalique.

5. Encre d'imprimerie selon l'une des revendications 1 à 4, caractérisée par le fait que la résine alkyde modifiée présente un indice OH de 50 à 150.

6. Encre d'imprimerie selon l'une des revendications 1 à 5, caractérisée par le fait que comme autre liant est contenue de la résine d'hydrocarbure en proportion allant jusqu'à 60 % en poids relativement à la teneur totale en liant.

7. Procédé de fabrication d'une encre d'imprimerie dans lequel on disperse, au moyen d'un appareil de dispersion, du pigment, un liant de résine alkyde modifié par des acides gras ayant un indice d'iode inférieur à 20 et éventuellement un autre liant et d'autres constituants usuels comme des lubrifiants, solvants, épaississants et agents thixotropiques, caractérisé par le fait que pour préparer le liant de résine alkyde, on fait réagir entre eux :

a) un acide gras à 6 à 20 atomes de carbone ou un mélange d'acides de ce genre ou de leurs triglycérides,

b) un polyol,

c) un produit de copolymérisation styrène/alcool allylique ayant un poids moléculaire (moyenne en poids) de 1 500 à 2 500 et un poids équivalent ester de 200 à 350 et

d) un acide dicarboxylique, la proportion du produit de copolymérisation styrène/alcool allylique étant de 1 à 30 mol % relativement à la somme du polyol et du produit de copolymérisation styrène/alcool allylique.

8. Procédé selon la revendication 7, caractérisé par le fait que comme constituant a), on utilise l'huile de coco et/ou l'huile de palmiste ou les acides gras tirés de celles-ci.

9. Procédé selon l'une des revendications 7 et 8, caractérisé par le fait que comme polyol, on utilise le triméthylolpropane, le glycérol et/ou le pentaérythritol.

10. Procédé selon l'une des revendications 7 à 9, caractérisé par le fait que comme acide dicarboxylique, on utilise l'acide phtalique, l'acide isophtalique, l'acide adipique, des acides gras dimères saturés ou l'acide tétrahydrophtalique.

11. Procédé selon l'une des revendications 7 à 10, caractérisé par le fait que la résine alkyde modifié présente un indice OH de 50 à 150.

12. Procédé selon l'une des revendications 7 à 11, caractérisé par le fait que comme autre liant, on utilise de la résine d'hydrocarbure en proportion allant jusqu'à 60 % en poids relativement à la teneur totale en liant.

13. Utilisation de l'encre d'imprimerie selon les revendications 1 à 6 pour l'impression planographique, typographique ou en creux.

14. Utilisation, pour la réalisation d'impressions sur papier aptes au désencrage, d'une encre d'imprimerie formée de pigment, d'un liant de résine alkyde qui a été obtenue par la réaction d'un acide gras à 6 à 20 atomes de carbone ou d'un mélange d'acides de ce genre ou de leurs triglycérides, d'un polyol, d'un produit de copolymérisation styrène/alcool allylique ayant un poids moléculaire (moyenne en poids) de 1 500 à 2 500 et un poids équivalent ester de 200 à 350 et d'un acide dicarboxylique, la proportion du produit de copolymérisation styrène/alcool allylique étant de 1 à 30 mol % relativement à la somme du polyol et du produit de copolymérisation styrène/alcool allylique, éventuellement d'un autre liant et d'autres constituants usuels comme des lubrifiants, solvants, épaississants et agents thixotropiques.